# EUROPEAN PATENT APPLICATION

(11) **EP 1 669 708 A2**
(43) Date of publication of application: **14.06.2006**
(21) Application number: 05425846.2
(22) Date of filing: 29.11.2005
(51) Int. Cl.: F27B 1/00, F27B 1/10

(54) **Kiln for burning lump materials**

(30) Priority: 13.12.2004 EP 04425914
(71) Applicant: Terruzzi Fercalx S.p.A., 20121 Milano (IT)
(72) Inventor: Terruzi Daniele c/oTerruzi Fercalx S.p.a, I-24050Spirano Bergamo (IT); Ragno Spiridione c/o Terruzi Fercalx S.p.aa, i-24050 Spirano Bergamo (IT)
(74) Representative: Long, Giorgio

(57) **Abstract**

The present invention relates to a kiln for treating lump material. Particularly, the invention relates to a kiln comprising a suction beam that can be employed in kilns for calcination (burning) and sintering of lump material such as limestone, dolomite and the like. Furthermore, the invention relates to a method for producing lime, as well as a method for controlling the reactivity and homogenization of the chemical composition of the lime.

## Description

### FIELD OF THE INVENTION

The present invention relates to a kiln for treating sized material. By "lump material" is meant any kind of material in various sized blocks made of mineral stone with a high content of calcium carbonate, magnesium carbonate. Particularly, the invention relates to a kiln comprising a suction beam that can be employed in kilns for calcination (burning) and sintering of lump material such as limestone, dolomite and the like. Furthermore, the invention relates to a method for producing lime, as well as a method for controlling the reactivity and homogenization of the chemical composition of the lime.

### BACKGROUND OF THE INVENTION

When treating said materials such as for producing lime, or more in general, for eliminating volatiles from a solid substance, pieces of the material to be treated are known to be loaded in kilns where they are subjected to a heat treatment.

Particularly, lime production derives from the known burning process (calcinations) of natural limestone CaCO₃ for obtaining lime CaO due to the reaction:

CaCO₃ + heat - > CaO + CO₂

which is usually carried out in a shaft kiln with circular, semi-circular, elliptical, square or rectangular section, double-shaft kiln, regenerative kiln or annular kiln.

Said lump calcareous, dolomite materials or the like are top-loaded in a kiln extending along a substantially vertical longitudinal axis. The material is sequentially passed, from the top down, through an inlet area of the material to be treated, a pre-heating area, a combustion (calcination) area placed between two or three levels of burners, a cooling area and an outlet area for the calcined material.

The apex part of the kiln is conventionally provided with a suction system for the combustion fumes that are eliminated through suitable pipelines. This suction creates a depression in the pre-heating area and in the calcination area which forces the hot combustion gases to rise such as to come in contact with and calcine the materials by drawing with them the CO₂ released,from the thermal reaction outlined above.

Simultaneously, in the outlet area of the kiln cool air is forced, which meets the lime in the outlet area and cools the latter. In addition, this air tends to rise, still under the effect of the above-mentioned depression, until it reaches the calcination area. There exists, accordingly, an air flow in the calcination area which can affect the calcination temperature. In addition, this cooling air in the cooling area tends to admix with any residual gases that are released when calcination is completed.

The upwards flow in the calcination area such as described above may cause substantial variations such as to negatively affect the completion of the calcination reaction with consequences on the reactivity and homogenization of the end product.

In other words, by passing directly from the calcination area to the cooling area, the lime is subjected to a sudden thermal inversion.

The technical problem at the heart of the present invention is thus to conceive a system for overcoming said drawback.

This problem is solved by employing a suction device in a kiln for burning lump materials such as cited in the annexed independent claim.

Accordingly, a first object of the present invention is to provide a kiln for treating mineral stone materials, such as limestone, dolomite and the like comprising said suction device.

A second object is to provide a method for preparing lime.

A third object is to provide a method for controlling the burning (calcination) level of a kiln for burning sized materials (limestone).

Further characteristics and the advantages of the present invention will be better understood from the description below of an embodiment thereof, which is given as a non-limiting example with reference to the figures in which:
- Fig. 1 is a schematic view of a system for burning lump materials according to the invention;
- Fig. 2A is a cross-sectional view of a suction device according to the invention;
- Fig. 2B is a perspective view of the device from Fig. 2A;
- Fig. 2C is a bottom plan view of the device from Fig. 2B.

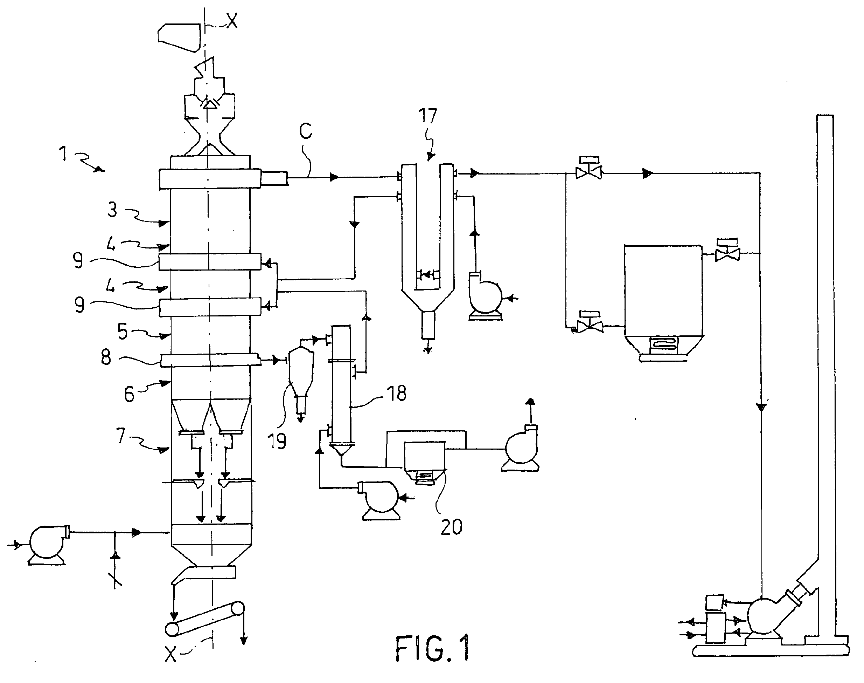

With reference to Fig. 1, with 1 has been designated a kiln for burning lump materials of any conventional kind, i.e. a shaft kiln, with circular, semi-circular, elliptical, square or rectangular which extends substantially vertically along a X-X axis and comprises from the top down a load area 2, a pre-heating area 3, at least two combustion areas 4, a post-calcination area 5, a cooling area 6 and an outlet area 7.

Particularly, the post-calcination area 5 is an area where the material is kept still for a long time so that the calcination reaction is brought to completion. This area is advantageously created by arranging a suction device 8 for the hot air and/or fumes from the cooling area, which defines the lower level thereof, whereas the upper level is defined by the burner beam 9 positioned at the lowest level, i.e. the nearest level to the outlet area 7.

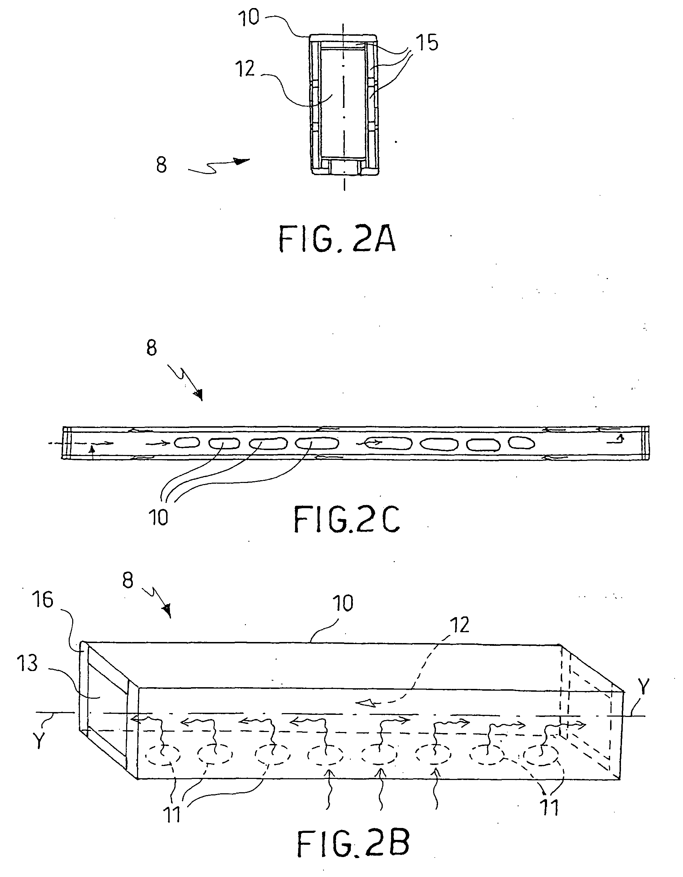

The suction device 8 for hot air and/or fumes of a kiln for burning lump materials, such as depicted in Fig. 2A-2C comprises a box member 10 provided with suction through holes 11 in communication with an inner channel 12 ending with an opening 13 that is connected to a conventional suction fan 14 (shown in Fig. 1) for sucking hot air and/or fumes from the cooling area out of said kiln.

Particularly, the box member 10 preferably is parallelepiped-shaped which longitudinally extends along a Y-Y axis and is provided with a peripheral gap system 15 suitable to allow a conventional cooling fluid to pass therethrough. In addition, hot air and/or fumes are sucked from the cooling area within the box member through said through holes 11. The air and/or fumes flow within said inner channel 12 and reach the opening 13 from which they subsequently pass to the suction fan 14, after the dust has been removed by means of filter devices such as a cyclone 19, optional, and a bag filter 20 and they have been cooled by a heat exchanger 18.

Preferably, the suction holes 11 of the box member 10 are drilled on a kiln side facing downwards such that said air or fumes can directly enter the inner channel 12. The opening 13, on the other hand, is drilled at an end 16 of the box member 10 and is connected to the suction fan 14 positioned outside the kiln 1, such as best illustrated in Fig. 1.

Preferably, the box member 10 is a steel beam cooled by means of diathermic oil similar to the prior art burner beams, but obviously without burner lances.

The advantage brought by the inventive device 8 is that it creates a depressed area comprised between the last level of burners 9 and said suction device 8. This area, also called the "post-calcination area" 5, and outlined in Fig. 1, allows providing an area in the kiln where the burnt material can be kept still for several hours, such that burning can be completed under a constant and controlled temperature and in the absence of gas flows which may interfere with the completion of the reaction of thermal transformation. The distance between the last level of burners and the suction beam depends on several structural and operating conditions of the kilns, such as the height and the capacity of the kiln, the particular type of material to be treated, the thermal capacity of the kiln and the type of product as desired. In any case, modifying these conditions is within the capacity of those skilled in the art.

As discussed above, any flow of air directly coming from the outlet area, such as cooling air, causes on the one hand the material to cool just subsequent to thermal treatment and on the other hand it brings cooler air to the calcination (combustion) area, which may be admixed with the calcination residual gases (mainly CO₂) which may affect the calcination thermal reaction degree.

The inventive device allows avoiding these problems by sucking the residual air and fumes coming from the cooling area.

Furthermore, the burnt material can be kept still in a "neutral" area which, for example for lime production, may range from 6 to 8 hours at a constant temperature ranging between 700° and 1200°, preferably about 900°C, thereby favouring the attainment of the reactivity and homogenization point of the optimum chemical structure.

A further advantage of the inventive suction device is that the sucked air and/or fumes can be recycled. In fact, they derive from the cooling air coming from the cooling area and that, while it rises, meets the burnt material, thereby becoming hot, at temperatures comprised between 250° and 550°C. The hot air, after it has been sucked by the inventive device, is sent to a heat exchanger where it releases the heat to cool air coming from the external environment of the kiln, the air being thus pre-heated. Once it has been pre-heated, such as at a temperature ranging between 150° and 500°C, it can be employed as the secondary combustion air S for the burners 9, such as illustrated in Fig. 1 by the arrow path. This secondary combustion air S can further be admixed with primary combustion air P deriving from external environment air that is heated by means of the combustion gases C recovered from the apex area of kiln 1. In fact, the combustion gases are also passed through a heat exchanger 17 in which external environment air is also passed such that it is pre-heated and recycled in the combustion system.

Accordingly, it should be understood that the inventive device also allows recycling the hot fumes and/or air of the kiln such that the performance of the kiln is enhanced, and the energy consumption is greatly reduced.

The box member 10 can be preferably covered by insulating and refractory material, such as bricks and/or pressed, in order to prevent its surface, which is relatively cold, from contacting the limestone that develops in the calcination area. In fact, a similar contact under operating conditions of the kiln would cause the limestone that is in contact with the box member to be subjected to a cooling and in any case to different operating conditions with respect to the limestone that is not in contact with said members.

Preferably, the kiln 1 comprises a first heat exchanger 17, which is positioned outside the kiln such that it receives the combustion fumes from the pre-heating area to pre-heat the primary combustion air P that is to be forced in the burners 9.

The kiln 1 further comprises a second heat exchanger 18 which is positioned flush with said suction device for pre-heating secondary combustion area S and force the same in said burners 9 possibly in admixture with said primary combustion air P.

A second object of the invention is to provide a method for manufacturing lime comprising the following successive steps:
- thermally treating mineral stone material;
- holding said thermally treated material under substantially adiabatic conditions.

The thermal treatment step can take place by direct contact with combustion gases which are preferably released by burner beams dipped in the material to be treated. The treatment temperature normally ranges between 750°C and 1500° C.

Furthermore, the thermal treatment is usually carried out under depression, i.e. the flow of the hot gases produced is counter-current relative to the flow of the material. Alternatively, for example in an annular shaft kiln, the thermal treatment can also be partially carried out in parallel flow.

The burnt material (lime) holding step is preferably carried out at a temperature not less than 700°C for a period of time ranging between 4-10 hours, preferably 6-8 hours.

Furthermore, said holding step is preferably carried out in the absence of intaken gas flows. In other words, no gas such as cooling air is provided. This air is forced in a subsequent step for the lime to be cooled before recovering the same at the end of the procedure.

Accordingly, the method of the invention comprises a cooling step after the holding step, where the treated material comes in contact with a cool air flow that is channelled from the kiln basement upwards.

A further object of the invention is a method for controlling the level of reactivity and homogenization of the chemical structure of material subjected to thermal treatment in a kiln for burning sized materials comprising the following successive steps:
- thermally treating said material through the intake of hot gases;
- holding said material in the absence of gaseous flows.

Particularly, said method is carried out for controlling the level of reactivity and homogenization of the lime chemical structure.

Similar to the method as described above, also in this case the steps are substantially the same.

## Claims

1. A kiln (1) for burning lump mineral stone material comprising from the top down along a vertical axis (X-X) an inlet area (2) for said material, a suction device (1) for combustion fumes, a pre-heating area (3), at least one calcination area (4), burners (9), a cooling area (6) and an outlet area (7), **characterized in that** it further comprises a post-calcination area (5) placed between said at least one calcination area and said cooling area and a further suction device (8) placed between said post-calcination area and said cooling area to suck cooling air after it has come in contact with and cooled the burnt material in the cooling area.

2. The kiln (1) according to claim 1, wherein the further suction device (8) comprises a box member (10) provided with suction through holes (11) in communication with an inner channel (12) with ends with an aperture (13).

3. The kiln (1) according to claim 2, wherein the further suction device (8) is connected through the aperture (13) to a suction fan (14) outside the kiln.

4. The kiln (1) according to claim 2 or 3, wherein the box member (10) is parallelepiped-shaped, and longitudinally extends along an axis (Y-Y) and is provided with a peripheral gap system (15) suitable for a cooling fluid to pass therethrough.

5. The kiln (1) according to any claim 2 to 4, wherein the suction through holes (11) of the box member (10) are drilled on a side of the kiln facing downwards whereas the aperture (13) is drilled at an end (15) of the box member.

6. The kiln (1) according to any claim 2 to 5, wherein the box member (10) is a steel beam cooled by means of diathermic oil.

7. The kiln (1) according to claim 6, wherein the kiln is externally covered with insulating material.

8. The kiln (1) according to any claims 1 to 7, further comprising a first heat exchanger (17) that is positioned such as to receive the combustion fumes in the pre-heating area for pre-heating primary combustion air (P) to be forced in the burners(9).

9. The kiln (1) according to claim 8, further comprising a second heat exchanger (18) which is positioned flush with said further suction device (8) for pre-heating secondary combustion area (S) and force the same in said burners (9) possibly in admixture with said primary combustion air (P).

10. A process for manufacturing lime, comprising the following successive steps:
- thermally treating mineral stone material;
- holding said thermally treated material under substantially adiabatic conditions.

11. The method according to claim 10, wherein the thermal treatment step is carried out by means of direct contact with hot combustion gases.

12. The method according to claim 10 or 11, wherein said thermal treatment is carried out at a temperature ranging between 750° and 1500°C.

13. The method according to any claim 10 to 12, wherein the thermal treatment is carried out under depression.

14. The method according to any claim 10 to 13, wherein the holding step is carried out at a temperature not less than 700°C for a time ranging between 4-10 hours.

15. The method according to any claim 10 to 13, wherein when the type of material to be treated is limestone or dolomite or the like for manufacturing lime, the holding step is carried out at a temperature not less than 700°C for a time of 6-8 hours.

16. The method according to any claim 10 to 15, wherein the holding step is carried out in the absence of intaken gas flows.

17. A method for controlling the level of reactivity and homogenization of the chemical structure of mineral stone material being subjected to thermal treatment, comprising the following successive steps:
- thermally treating said material through intake of hot gases;
- holding said material in the absence of gaseous flows.
